# EUROPÄISCHE PATENTSCHRIFT

(11) **EP 3 791 436 B1**
(45) Veröffentlichungstag und Bekanntmachung des Hinweises auf die Patenterteilung: **26.02.2025**
(21) Anmeldenummer: 19723739.9
(22) Anmeldetag: 06.05.2019
(51) Int. Cl.: H01M 10/04, B65G 37/00

(54) **BATTERIEZELLEN-VORBEREITUNGSTECHNIK**
BATTERY CELL PREPARATION TECHNIQUE
TECHNIQUE DE PRÉPARATION DE CELLULES DE BATTERIE

(30) Priorität: 07.05.2018 DE 102018110865
(43) Veröffentlichungstag der Anmeldung: 17.03.2021
(73) Patentinhaber: KUKA Systems GmbH, 86165 Augsburg (DE)
(72) Erfinder: MERZ, Paul, 63834 Sulzbach (DE)
(74) Vertreter: Oelke, Jochen
(86) Internationale Anmeldenummer: PCT/EP2019/061560
(87) Internationale Veröffentlichungsnummer: WO 2019/215089

(56) Entgegenhaltungen:
- EP-A2- 1 015 361
- WO-A1-2018/049122
- CN-A- 107 394 244

## Beschreibung

Die vorliegende Offenbarung betrifft eine Technik zur Vorbereitung von Batteriezellen für eine Batteriemodulfertigung. Im Rahmen der Vorbereitung werden Batteriezellen als Roh-Batteriezellen zugeführt, durch einen oder mehrere Vorbereitungs-Prozesse in eine sogenannte vorbereitete Batteriezelle gewandelt und an mindestens einen nachgelagerten Prozess für die Batteriemodulfertigung übergeben. Zu den Vorbereitungsprozessen können beispielsweise die (chemische) Vorbehandlung einer Batteriezellenoberfläche, das Aufbringen einer Isolierschicht, insbesondere einer Isolierfolie, das Aktivieren einer Oberflächenstruktur und/oder das Bestücken einer Oberfläche der Batteriezelle mit einem Distanzelement umfassen.

In der nachgelagerten Batteriemodulfertigung werden zwei oder mehr vorbereitete Batteriezellen in der Regel zu einem Stapel gefügt, der den elektrischen Speicher eines Batteriemoduls bildet, insbesondere eines Batteriemoduls für ein elektrisches Fahrzeug oder einen stationären Energiespeicher.

Bisher bekannte Vorbereitungstechniken zur Vorbereitung von Roh-Batteriezellen für eine nachgelagerte Batteriemodulfertigung sind nicht optimal ausgebildet.

Sie erfordern in der Regel mindestens einen Prozess, bei dem die Batteriezellen einzeln durch ein Handlinggerät wie beispielsweise einen Industrieroboter gegriffen und einer Bearbeitungsstation zugeführt werden muss, wo die Batteriezelle abgelegt oder eine andere Greif- oder Führungseinrichtung übergeben werden muss. Nach dem Bearbeitungsprozess muss die Batteriezelle erneut durch ein Handlinggerät gegriffen und einer Folgestation zugeführt werden. Die hierbei erforderlichen Greif- und Umsetzvorgänge können zu gelegentlichen Fehlern oder Verzögerungen führen, so dass die vorbereiteten Batteriezellen zunächst einen Puffer zugeführt werden müssen, in dem stets ein gewisser Vorrat an vorbereiteten Batteriezellen gehalten wird, damit nachfolgende Prozesse nicht ins Stocken geraten.

Es ist jedoch für die Batteriemodulfertigung angestrebt, die vorbereiteten Batteriezellen kontinuierlich zu übernehmen, insbesondere ohne einen Pufferspeicher.

Aus der Druckschrift EP 1 015 361 A2 ist ein Hochgeschwindigkeits-Herstellungssystem, insbesondere für Batterien, bekannt. Hierbei werden Batterien von einer Transporteinrichtung zu einer Bearbeitungsstation transportiert und anschließend, durch eine Transporteinrichtung, weiter transportiert.

Es ist Aufgabe der vorliegenden Erfindung, eine verbesserte Batteriezellen-Vorbereitungstechnik aufzuzeigen. Die Erfindung löst diese Aufgabe durch die Merkmale der eigenständigen Ansprüche.

Die Batteriezellen-Vorbereitungstechnik gemäß der vorliegenden Offenbarung umfasst eine Batteriezellen-Vorbereitungslinie, einen Warenträger zur Verwendung in der Batteriezellen-Vorbereitungslinie sowie ein Batteriezellen-Vorbereitungsverfahren.

Die Vorbereitungstechnik kommt gegenüber vorbekannten Techniken mit einem geringeren vorrichtungstechnischen Aufwand aus und ermöglicht eine Durchsatzsteigerung.

Die Batteriezellen-Vorbereitungslinie gemäß der vorliegenden Offenbarung ist zur Vorbereitung von einer oder mehreren Batteriezellen für eine Batteriemodulfertigung vorgesehen und ausgebildet. Sie kann insbesondere als kombinierte Förder- und Bearbeitungsstation ausgebildet sein, die bevorzugt eine oder mehrere Roh-Batteriezellen in einem Zuführbereich aufnimmt und ein oder mehrere vorbereitete Batteriezellen an einem Übergabebereich bereitstellt.

Nachfolgend wird für den Begriff Batteriezellen-Vorbereitungslinie vereinfachend der Begriff Vorbereitungslinie verwendet.

Die Vorbereitungslinie umfasst mindestens einen Linearförderer, der mindestens eine Roh-Batteriezelle von einem Zuführbereich zu einer oder mehreren Vorbereitungs-Prozessstationen bewegt, die entlang der Vorbereitungslinie angeordnet sind. Der mindestens eine Linearförderer bewegt weiterhin eine oder mehrere vorbereitete Batteriezellen weiter zu einem Übergabebereich. Der Übergabebereich kann bereits ein Bestandteil einer nachfolgenden Batteriemodulfertigung sein.

Die Vorbereitungslinie bzw. der Linearförderer umfasst ein Hauptfördermittel zur Batteriezellen-Bewegung, das dazu ausgebildet ist, die mindestens eine Batteriezelle bei einer konstanten Makro-Förderbewegung zu transportieren. Die Vorbereitungslinie bzw. der Linearförderer umfasst darüber hinaus mindestens ein Hilfsfördermittel, das in der Förderstrecke des Hauptfördermittels zwischengeschaltet ist. Das Hilfsfördermittel ist dazu ausgebildet, mindestens eine Batteriezelle mit einer Zwischen-Förderbewegung zu transportieren, die von der Makro-Förderbewegung temporär abweicht, so dass eine Batteriezelle entlang der Förderstrecke des Hilfsfördermittels zu einer Vorbereitungs-Prozessstation mit einer solchen Geschwindigkeit führbar ist, dass die momentane Bewegung der Batteriezelle den Prozessanforderungen dieser Vorbereitungs-Prozessstation angepasst ist.

Der Begriff "Vorbereitungs-Prozessstation" wird nachfolgend vereinfachend durch den Begriff Prozessstation ersetzt.

Die mindestens eine Batteriezelle wird in der Vorbereitungslinie bevorzugt in einer durchgehend linearen Bewegung von einem Zuführbereich, wo sie als Roh-Batteriezelle vorliegt, an einer oder mehreren Prozessstationen vorbeibewegt und zu einem Übergabebereich geführt, wo sie als vorbereitete Batteriezelle vorliegt und für die nachfolgende Batteriemodulfertigung verwendet werden kann.

Innerhalb der Vorbereitungslinie liegt eine Makro-Förderbewegung vor, die insbesondere an den Transferpunkten zum Zuführbereich und zum Übergabebereich konstant ist, also insbesondere bei einer konstanten Fördergeschwindigkeit und/oder einer konstanten Fördertaktung erfolgt. Die Gesamtförderstrecke ist in einem, zwei oder mehr Abschnitte einer Hauptförderstrecke, die durch das Hauptfördermittel gebildet wird, und andererseits in mindestens einen und ggf. zwei oder mehrere zwischengelagerte Förderstrecken unterteilt, die durch das mindestens eine Hilfsfördermittel gebildet sind. Auf der Hauptförderstrecke erfolgt die Bewegung einer Batteriezelle gemäß der konstanten Makro-Förderbewegung. Auf einer zwischengelagerten Hilfsförderstrecke kann eine davon abweichende Zwischen-Förderbewegung vorliegen, die an die jeweiligen Prozessanforderungen einer Prozessstation angepasst ist, die entlang der Hilfsförderstrecke wirkt und insbesondere dort stationär angeordnet ist.

Es wird somit erreicht, dass ohne ein zusätzliches Greifen oder Umsetzen von Batteriezellen mindestens ein Vorbereitungsprozess durchführbar ist, der auf eine Batteriezelle einwirkt und hinsichtlich der Relativbewegung zwischen der Batteriezelle und dem jeweiligen Prozessorgan Anforderungen an die Batteriezellenbewegung stellt, die von den Anforderungen für die Makro-Förderbewegung zwischen dem Zuführbereich und dem Übergabebereich abweichen. Das Hilfsfördermittel ist bevorzugt dazu ausgebildet, eine Batteriezelle gegenüber der Makro-Förderbewegung derart temporär beschleunigt und verlangsamt zu bewegen, dass an den Übergangspunkten zwischen den Abschnitten der Hauptförderstrecke und der Hilfsförderstrecke die Makro-Förderbewegung eingehalten wird.

Eine Batteriezelle kann durch das Hauptfördermittel und das mindestens eine Hilfsfördermittel direkt bewegt werden. Bevorzugt ist jedoch eine indirekte Bewegung einer Batteriezelle, wobei die Batteriezelle in einem Warenträger aufgenommen und gehalten ist, der durch das Hauptfördermittel und das mindestens eine Hilfsfördermittel bewegt wird.

Die Vorbereitungslinie gemäß der vorliegenden Offenbarung kann einen oder bevorzugt mehrere Warenträger zur Aufnahme von einer oder mehreren Batteriezellen aufweisen. Besonders bevorzugt ist ein Warenträger genau zur Aufnahme von einer Batteriezelle ausgebildet. Mit anderen Worten ist ein Warenträger ein Einzel-Warenträger bzw. ein Warenträger zur Einzel-Aufnahme von einer Batteriezelle.

Das Hauptfördermittel und das mindestens eine Hilfsfördermittel sind dazu ausgebildet, einen oder mehrere Warenträger mit darin aufgenommenen Batteriezellen zu bewegen. Insbesondere können auf jedem Teil der Haupt-Förderstrecke sowie auf jeder Hilfsförderstrecke momentan ein, zwei oder mehr Batteriezellen bzw. Warenträger gefördert werden. Insbesondere kann auf einer Hilfsförderstrecke eine beschränkte Anzahl von Batteriezellen oder Warenträgern gefördert werden, beispielsweise zu jedem Zeitpunkt eine Förderzahl von genau einer Batteriezelle bzw. einem Warenträger oder von genau zwei oder drei Batteriezellen bzw. Warenträgern.

Ein Hilfsfördermittel ist bevorzugt dazu ausgebildet, eine Ist-Bewegung einer Batteriezelle an eine Soll-Bewegung anzupassen, d.h. insbesondere die Ist-Bewegung einer Batteriezelle zu steuern oder zu regeln. Hierbei können einzelne Anteile der Ist-Bewegung wie beispielsweise eine Ist-Ausrichtung, gesteuert und andere Teile, wie beispielsweise eine Ist-Position und eine Ist-Geschwindigkeit, geregelt werden. Die Ist-Bewegung kann somit innerhalb der Zwischen-Förderbewegung an einer Hilfsförderstrecke exakt an die Anforderungen eines Vorbereitungsprozesses angepasst werden. Alternativ oder zusätzlich kann ein Vorbereitungsprozess an einen Teil der Ist-Bewegung angepasst werden, insbesondere an einen festgestellten Querversatz einer Batteriezelle gegenüber einer in Längsrichtung der Vorbereitungslinie verlaufenden Bezugslinie oder Bezugskante.

Mit anderen Worten kann mindestens ein Prozessorgan einer Vorbereitungs-Prozessstation in Abhängigkeit von einer Ist-Position und/oder einer Ist-Ausrichtung einer Batteriezelle gesteuert oder geregelt sein.

Ein Warenträger gemäß der vorliegenden Offenbarung ist dafür vorgesehen und ausgebildet, in einer Batteriezellen-Vorbereitungslinie gemäß der vorliegenden Offenbarung verwendet zu werden. Der Warenträger umfasst einen Grundkörper mit einem Aufnahmenest für die Aufnahme von einer oder mehreren Batteriezellen, insbesondere für die Aufnahme von genau einer Batteriezelle. Der Warenträger umfasst weiterhin eine Anlagestruktur, die einen Anschlag für eine passgenaue Aufnahme einer Batteriezelle bildet. Mit anderen Worten ist die Anlagestruktur dazu ausgebildet, eine Referenzlage für eine aufzunehmende Batteriezelle vorzugeben.

Der Warenträger umfasst gemäß einer ersten bevorzugten Ausführung mindestens einen Magneten, der mit einem Magnetlinearförderer eines Hilfsfördermittels der Batteriezellen-Vorbereitungslinie zusammenwirkt. Der Magnetlinearförderer kann insbesondere ein Linearmotor sein.

Gemäß einer weiteren bevorzugten Ausführung umfasst der Warenträger eine Bezugsstruktur, die eine bevorzugt berührungslose Erfassung der Ist-Position und/oder der Ist-Ausrichtung des Warenträgers durch ein Erfassungsmittel der Batteriezellen-Vorbereitungslinie ermöglicht oder unterstützt. Dies kann insbesondere ein optischer oder elektromagnetischer Marker sein.

Gemäß einer weiteren bevorzugten Ausführung umfasst der Warenträger ein Leitstruktur, die eine Anpassung, insbesondere eine steuernde Vorgabe, der Ist-Position und/oder eine Anpassung bzw. steuernde Vorgabe der Ist-Ausrichtung des Warenträgers gegenüber der Batteriezellen-Vorbereitungslinie ermöglicht oder unterstützt. Dies kann insbesondere eine Führungskante oder eine Führungsnut sein.

Gemäß einer weiteren bevorzugten Ausführung umfasst der Warenträger ein Haltemittel, das eine Batteriezelle in einer eingesetzten Lage, insbesondere der Referenzlage, an dem Warenträger fixiert und/oder unter Vorspannung gegen die mindestens eine Anlagestruktur fixiert. Das Haltemittel ist bevorzugt als selbstschließendes Haltemittel ausgebildet.

Die Merkmale der vorgenannten bevorzugten Ausführungen können jeweils für sich allein oder in einer beliebigen Kombination genutzt werden.

Ein Batteriezellen-Vorbereitungsverfahren gemäß der vorliegenden Offenbarung ist zur Vorbereitung und Bereitstellung mindestens einer Batteriezelle für eine (nachfolgende) Batteriemodulfertigung vorgesehen und ausgebildet. In dem Verfahren wird mindestens eine Batteriezelle als Roh-Batteriezelle in einer Batteriezellen-Vorbereitungslinie von einem Zuführbereich zu einer oder mehreren Vorbereitungs-Prozessstationen bewegt und als vorbereitete Batteriezelle weiter zu einem Übergabebereich bewegt. Das Verfahren umfasst weiterhin mindestens die folgenden Schritte.

Die Batteriezelle wird bei einer (im regulären Betrieb) konstanten Makro-Förderbewegung transportiert, insbesondere bei einer an den Transferpunkten zum Zuführbereich und zum Übergabebereich konstanten Fördergeschwindigkeit und/oder Fördertaktung,durch ein Hauptfördermittel Im Bereich von mindestens einer Hilfsförderstrecke, die einen Teilabschnitt der Batteriezellen-Vorbereitungslinie zwischen dem Zuführbereich und dem Übergabebereich umfasst, wird eine Batteriezelle bei einer Zwischen-Förderbewegung, durch mindestens ein Hilfsfördermittel transportiert. Die Zwischen-Förderbewegung weicht temporär von der Makro-Förderbewegung ab und zwar derart, dass die Batteriezelle entlang der Hilfsförderstrecke einem Vorbereitungs-Prozess mit einer solchen Geschwindigkeit zuführbar ist, dass die momentane Bewegung der Batteriezelle an die Anforderungen dieses Vorbereitungs-Prozesses angepasst ist. Die Anpassung kann eine Vorgabe und insbesondere eine Steuerung oder Regelung einer momentanen Ist-Position, einer momentanen Ist-Geschwindigkeit sowie einer momentanen Ist-Ausrichtung umfassen. Die vorgenannten Bewegungscharakteristika können jeweils einzeln oder gemeinsam und jeweils in Unteranteilen separat gesteuert oder geregelt werden.

Der mindestens eine Vorbereitungsprozess wirkt bevorzugt von oben her auf eine Oberfläche einer bewegten Batteriezelle ein. Darüber hinaus wird der Vorbereitungsprozess bevorzugt durch ein stationär angeordnetes Prozessorgan ausgeführt. Alternativ oder zusätzlich kann ein Warenträger so gestaltet sein, dass eine Einwirkung auf die Batteriezelle aus einer anderen Richtung erfolgt, bspw. in horizontaler Richtung, insbesondere in der Querrichtung, oder von unten her. Der Warenträger kann demensprechend mindestens eine seitliche oder untere Öffnung aufweisen, durch die ein Zugriff ermöglicht ist. Insbesondere kann ein Warenträger einen Grundkörper in Form eines Rahmens mit einer, zwei oder mehr seitlichen Öffnungen ausgebildet sein.

Durch die Batteriezellen-Vorbereitungstechnik gemäß der vorliegenden Offenbarung wird somit eine kombinierte Förder- und Bearbeitungstechnik bereitgestellt, die eine schnelle, sichere und im Wesentlichen kontinuierliche Vorbereitung und Bereitstellung von Batteriezellen für einen nachfolgenden Batteriemodulfertigungsprozess gewährleistet. Die vorgeschlagene Technik kommt weiterhin im Vergleich zu einem mehrfachen Greifen und Umsetzen von Batterien mit einfacheren und kostengünstigeren technischen Mitteln aus.

Weitere vorteilhafte Ausbildungen der Erfindung sind in den Unteransprüchen, der nachfolgenden detaillierten Beschreibung sowie den beigefügten Zeichnungen angegeben.

Die Erfindung ist in den Zeichnungen beispielhaft und schematisch dargestellt. Diese zeigen:
- Figur 1:: eine Batteriezellen-Vorbereitungslinie gemäß der vorliegenden Offenbarung in einer perspektivischen Darstellung;
- Figur 2:: eine schematische Seitenansicht auf eine Batteriezellen-Vorbereitungslinie in einer zweiten Ausführung;
- Figuren 3 und 4:: eine Draufsicht und eine Stirnansicht eines Warenträgers gemäß der vorliegenden Offenbarung;
- Figur 5 und 6:: Schnittansichten gemäß Schnittlinien V-V und VI-VI des Warenträgers aus Figur 3.

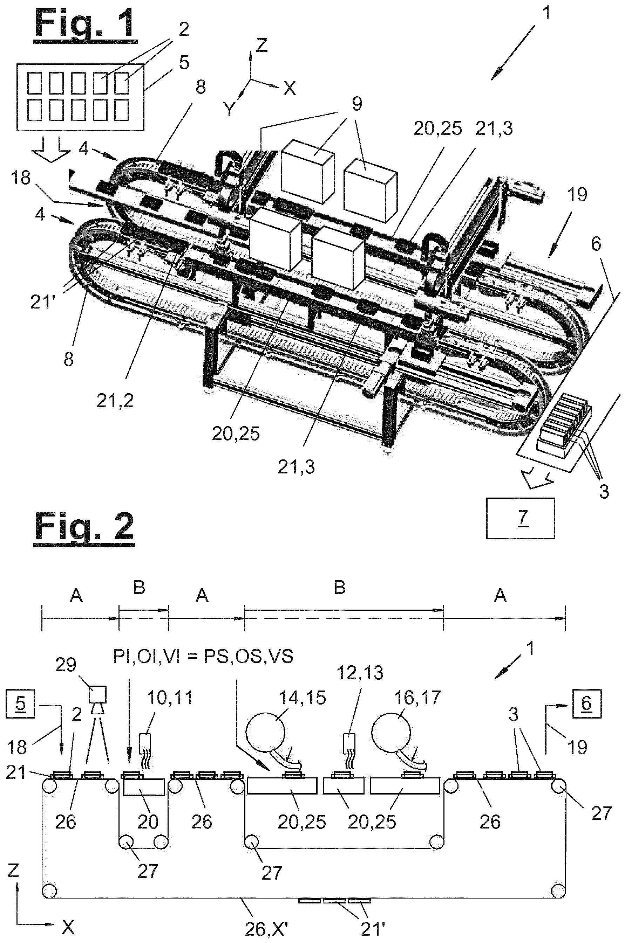

Figur 1 zeigt eine beispielhafte Ausführung einer Batteriezellen-Vorbereitungslinie (1) gemäß der vorliegenden Offenbarung. Diese fördert ein oder mehrere Batteriezellen (2,3) von einem Zuführbereich (5) zu einem Übergabebereich (6). Die Förderrichtung ist eine im Wesentlichen lineare und im Wesentlichen horizontale Richtung, die in den Zeichnungen als Längsrichtung oder Vorlaufrichtung (X) bezeichnet ist. Eine weitere im Wesentlichen horizontale Richtung, die quer zur Förderrichtung (X) verläuft, ist in den Zeichnungen als Querrichtung (Y) gekennzeichnet. Eine zu der Vorlaufrichtung (X) und der Querrichtung (Y) im Wesentlichen orthogonale und nach oben weisende Richtung ist in den Zeichnungen als Vertikalrichtung (Z) gekennzeichnet.

Die Vorbereitungslinie (1) umfasst einen oder mehrere Linearförderer (4). Eine Batteriezelle wird in Form einer Roh-Batteriezelle (2) dem Linearförderer (4) an einem Transferpunkt (18) von dem Zuführbereich (5) her zugeführt. Der Transferpunkt (18) kann beliebig ausgebildet sein. Beispielsweise kann ein sogenanntes T-Portal mit einem Greifer vorgesehen sein, der jeweils eine Roh-Batteriezelle (2) aufnimmt und bevorzugt einzeln auf einem der Linearförderer (4) ablegt.

Der mindestens eine Linearförderer (4) ist zumindest zweiteilig ausgebildet und umfasst ein Hauptfördermittel (8) und ein in der Förderstrecke des Hauptfördermittels (8) zwischengeschaltetes Hilfsfördermittel (20). Alternativ können zwei oder mehr Hilfsfördermittel (20) vorgesehen sein, die in der Förderstrecke des Hauptfördermittels (8) zwischengeschaltet sind, was beispielhaft in Figur 2 gezeigt ist.

Zumindest ab dem Transferpunkt (18) wird eine Batteriezelle (2) durch das Hauptfördermittel (8) bei einer konstanten Makro-Förderbewegung (A) transportiert.

Am Ende der Förderstrecke in Vorlaufrichtung (X) des Hauptfördermittels (8) befindet sich ein zweiter Transferpunkt (19), über den eine Batteriezelle, hier eine vorbereitete Batteriezelle (3), zu dem Übergabebereich (6) hin ausgebracht wird. Auch der zweite Transferpunkt (19) kann eine beliebige Ausbildung haben. In dem Beispiel von Figur 1 werden die kontinuierlich zu dem Transferpunkt geförderten vorbereiteten Batteriezellen (3) nach und nach in Aufnahmeregister eingebracht, insbesondere in einer solchen Anzahl und Sortierung, dass in einem Aufnahmeregister genau die benötigte Zusammenstellung von vorbereiteten Batteriezellen (3) für die Fertigung von genau einem Batteriemodul zusammengefasst ist.

Das Förderelement (26) des Hauptfördermittels (8) kann beliebig angetrieben sein, insbesondere durch einen oder mehrere steuerbare Förderantriebe (27). Gemäß dem Beispiel in Figur 2 kann ein Teil des Förderelements (26), insbesondere ein Teil des Obertrums, im Bereich der Überdeckung mit einem Hilfsfördermittel (20, 25) gegenüber der Förderebene zurückversetzt sein. Eine bereichsweise zurückversetzte Führung des Förderelements (26) kann auf beliebige Weise erfolgen, insbesondere in Form einer Schlaufenführung, wie sie in Figur 2 skizziert ist. Alternativ kann anstelle eines durchgehenden Förderelements eine Mehrzahl von Förderelementen vorgesehen sein, die jeweils einen oder mehrere Abschnitte der Förderstrecke des Hauptfördermittels bilden. Mit anderen Worten können diejenigen Teile des mindestens einen Förderelements (26), die in der Förderebene verlaufen, die Förderstrecke des Hauptfördermittels (8) bilden. Zwischen den Abschnitten der Förderstrecke des Hauptfördermittels (8) und der Förderstrecke eines zwischengeschalteten Hilfsfördermittels (20, 25) kann eine transportierte Batteriezelle (2, 3) und insbesondere ein Warenträger (21) in einer Linearbewegung übergeben werden. Hierzu schließen die Abschnitt der Förderstrecke des Hauptfördermittels (8) und die Förderstrecken des mindestens einen Hilfsfördermittels (20, 25) bevorzugt direkt aneinander an, insbesondere unter gemeinsam fluchtender bzw. ebener Anordnung der Förderstrecken.

Entlang des mindestens einen Linearförderers (4) und insbesondere entlang der jeweiligen Hilfsfördermittel (20) bzw. Hilfsförderstrecken (20) sind eine oder mehrere Vorbereitungs-Prozessstationen (9) angeordnet. Die Vorbereitungs-Prozessstationen (9) können eine beliebige Ausbildung haben. Gemäß dem Beispiel von Figur 2 kann eine erste Prozessstation (9) eine Reinigungsvorrichtung (10) sein, die eine Oberfläche einer Batteriezelle (2,3) von Verschmutzungen befreit. Die Reinigungsvorrichtung (10) kann hierfür ein beliebig geeignetes Prozessorgan (11) aufweisen, insbesondere eine Auftragsvorrichtung und/oder eine Entfernungsvorrichtung für Reinigungsfluid. Mit anderen Worten ist die Reinigungsvorrichtung (10) dazu ausgebildet, ein Reinigungsfluid aufzutragen und etwaig nachfolgend zu entfernen.

In dem Beispiel von Figur 2 ist eine nachfolgende zweite Prozessstation (14) als eine Material-Auftragsvorrichtung ausgebildet, die ein Zusatzmaterial auf einer Oberfläche einer Batteriezelle (2,3) aufträgt. Die Material-Aufsatzvorrichtung (14) kann hierzu ein beliebiges geeignetes Prozessorgan (15) aufweisen, insbesondere einen Folien-Applikator, einen Klebeband-Applikator und/oder einen Anstrichmittel-Applikator. Die Material-Auftragsvorrichtung (14) ist mit anderen Worten dazu ausgebildet, einen Klebstoff, einen Isoliermittel und/oder ein Dichtungsmittel auf einer Oberfläche einer Batteriezelle (2,3) aufzutragen.

In dem Beispiel von Figur 2 ist eine wiederum nachfolgende dritte Prozessstation (12) als eine Oberflächen-Behandlungsvorrichtung (12) ausgebildet, die auf ein Oberflächenmaterial einer Batteriezelle (2,3) einwirkt. Das Oberflächenmaterial kann ein durch die vorhergehende Material-Auftragsvorrichtung (14) aufgebrachtes Zusatzmaterial umfassen und/oder eine ggf. zuvor gereinigte Roh-Oberfläche der Batteriezelle (2,3). Die Oberflächen-Behandlungsvorrichtung (12) umfasst ein beliebiges geeignetes Prozessorgan (13), insbesondere einen Plasma-Applikator und/oder einen Strahlungs-Applikator. Mit anderen Worten ist die Oberflächen-Behandlungsvorrichtung (12) bevorzugt dazu ausgebildet, auf ein Oberflächenmaterial einer Batteriezelle (2,3) ein Plasma (ionisiertes Gas) und/oder Strahlung aufzubringen. Die Oberflächenbehandlung kann insbesondere eine chemische Oberflächenbehandlung sein, d.h. eine Behandlung die durch Hinzugabe eines Stoffs und/oder von Energie eine chemische Reaktion im Bereich der Oberfläche der Batteriezelle auslöst oder unterstützt.

In dem Beispiel von Figur 2 ist eine wiederum nachfolgende vierte Prozessstation (16) als Bestückungsvorrichtung ausgebildet, die eine Bestückung auf einer Oberfläche einer Batteriezelle (2,3) aufträgt. Die Bestückungsvorrichtung (16) kann hierfür ein beliebiges geeignetes Prozessorgan (17) aufweisen, insbesondere einen Distanzstück-Applikator und/oder einen Klebeelement-Applikator. Mit anderen Worten ist die Bestückungsvorrichtung (16) bevorzugt dazu ausgebildet, auf die Oberfläche einer Batteriezelle (2,3) eine Distanzfolie und/oder ein Distanzstück aufzubringen. Eine Distanzfolie und/oder ein Distanzstück kann in einem Batteriezellenstapel für ein nachfolgend zu fertigendes Batteriemodul eine Beabstandung und ggf. eine Binnen-Fixierung von benachbarten (vorbereitenden) Batteriezellen (3) bewirken.

Das mindestens eine Hilfsfördermittel (20) kann beliebig ausgebildet sein. Es ist insbesondere dazu ausgebildet, mindestens eine Batteriezelle (2,3), insbesondere eine in einem Warenträger (21) gehaltene Batteriezelle (2,3) mit einer Zwischen-Förderbewegung (B) zu bewegen, die von der Makro-Förderbewegung (A) abweicht und an die Prozessanforderungen einer der vorgenannten Vorbereitungs-Prozessstationen (9,10,12,14,16) angepasst ist.

Besonders bevorzugt ist ein Hilfsfördermittel (20) als Magnetlinearförderer ausgebildet, insbesondere als ein Linearmotor (25), der mit mindestens einem Magneten (22,23,24) eines Warenträgers (21) zusammenwirkt.

Das Hauptfördermittel (8) kann ebenfalls beliebig ausgebildet sein. Es ist insbesondere dazu ausgebildet, eine Mehrzahl von Batteriezellen (2,3) und insbesondere mehrere jeweils einzeln in Warenträgern (21) aufgenommene Batteriezellen (2,3) zu transportieren. Dabei transportiert insbesondere das Hauptfördermittel (8) in mehreren Teilbereichen der Gesamtlänge des Linearförderers (4) zwischen den Transferpunkten (18,19) jeweils direkt die ein oder mehreren Warenträger (21), in denen jeweils in Aufnahmenestern (31) die Batteriezellen (2,3) aufgenommen sind. Ein direkter Kontakt zwischen einer Batteriezelle (2,3) und dem Hauptfördermittel (8) ist möglich, aber nicht erforderlich. Das Hauptfördermittel (8) ist bevorzugt als Kreislaufförderer ausgebildet, der einen oder mehrere Warenträger (21), insbesondere bestückte Warenträger (21), in der Vorlaufrichtung (X) vom Zuführbereich (5) zum Übergabebereich (6) fördert. Das als Kreislaufförderer ausgebildete Hauptfördermittel (8) ist bevorzugt weiterhin dazu ausgebildet, in einer Rücklaufrichtung (X') einen oder mehrere Warenträger, insbesondere leere Warenträger (21'), vom Übergabebereich (6) zum Zuführbereich (5) zu retournieren. Das Hauptfördermittel (8) kann dabei besonders bevorzugt ein umlaufendes Förderelement (26) aufweisen, beispielsweise ein bevorzugt umlaufendes Förderband. Alternativ kann ein beliebiges anderes Förderelement vorgesehen sein, beispielsweise eine Förderkette oder eine Gleitbahn mit einem beispielsweise linearen Schlepp- oder MitnahmeMittel.

Gemäß einer bevorzugten Ausführungsvariante ist einer Vorbereitungs-Prozessstation (9,10,12,14,16) ein eigenes Hilfsfördermittel (20) zugeordnet. In dem Beispiel von Figur 2 ist jeder der Prozessstationen (10,12,14,16) ein separates Hilfsfördermittel (20) zugeordnet. Alternativ kann einer Mehrzahl, beispielsweise einer Gruppe von insbesondere benachbarten Prozessstationen (14,12,16) ein gemeinsames Hilfsfördermittel (20) zugeordnet sein.

Eine Vorbereitungs-Prozessstation (9) und insbesondere jede Prozessstation (10,12,14,16) kann gemäß einer bevorzugten Ausführung derart an der Batteriezellen-Vorbereitungslinie (1) und insbesondere an der Förderstrecke eines Hilfsfördermittels (20) angeordnet sein, dass ein Prozessorgan (11,13,15,17) der jeweiligen Vorbereitungs-Prozessstation (9) im Wesentlichen von oben auf eine Batteriezelle (2,3) einwirkt, die durch das jeweilige Hilfsfördermittel (20) an dem jeweiligen Prozessorgan (11,13,15,17) entlangbewegt wird. Besonders bevorzugt ist eine Vorbereitungs-Prozessstation (9) und/oder deren Prozessorgan (11,13,15,17) stationär angeordnet, insbesondere stationär über einer Förderstrecke eines Hilfsfördermittels (20).

Ein Hilfsfördermittel (20) und insbesondere der Magnetlinearförderer (25) ist bevorzugt dazu ausgebildet, eine Ist-Bewegung eines Warenträgers (21) und/oder eine Ist-Bewegung einer Batteriezelle (2,3) an eine Soll-Bewegung anzupassen. Die Soll-Bewegung kann gemäß den Prozessanforderungen einer jeweiligen Vorbereitungs-Prozessstation (9) festgelegt sein und insbesondere innerhalb des Einwirkbereichs zwischen dem jeweiligen Prozessorgan (11,13,15,17) und einer Batteriezelle (2,3) eine (momentane) Soll-Position und/oder eine Soll-Orientierung und/oder eine Soll-Geschwindigkeit vorgeben. Die Anpassung der Ist-Bewegung an die Soll-Bewegung kann vollständig oder in Teilen durch Steuerung oder Regelung der Ist-Position (PI) und/oder der Ist-Geschwindigkeit (VI) und/oder der Ist-Ausrichtung (OI) erfolgen. Die Ist-Position (PI) kann ggf. separat als momentane LängsPosition insbesondere entlang der Vorlaufrichtung (X) und als Quer-Position insbesondere entlang der Querrichtung (Y) festgelegt sein. Die beiden Positionsanteile können jeweils gemeinsam oder unabhängig voneinander durch Steuerung oder Regelung an eine entsprechende Soll-Position in Vorlaufrichtung (X) und/oder in Längsrichtung (X) angepasst sein.

Um eine möglichst exakte Anpassung der Soll-Bewegung einer Batteriezelle zu erreichen, sind verschiedene begünstigende Techniken und Strukturen verwendbar, die einzeln oder in Kombination genutzt werden können. Nachfolgend werden einige der möglichen Techniken und Strukturen beschrieben. Alternativ oder zusätzlich können andere geeignete Techniken oder Strukturen vorgesehen sein.

Die Batteriezellen-Vorbereitungslinie (1) umfasst bevorzugt mindestens ein Erfassungsmittel (29), das dazu ausgebildet ist, eine (momentane) Ist-Position (PI) und/oder eine Ist-Ausrichtung (OI) einer Batteriezelle (2,3) und/oder eines Warenträgers (21,21') zu erfassen. Das Erfassungsmittel (29) kann hierzu beliebig ausgebildet sein und auf beliebige Weise mit einer Batteriezelle (2,3) und/oder einem Warenträger (21,21') und etwaig dort vorgesehenen erkennbaren Bezugsstrukturen (28) zusammenwirken. Das Erfassungsmittel ist bevorzugt als berührungsloses Erfassungsmittel ausgebildet. Gemäß einer alternativen Ausführung kann die Vorbereitungslinie (1) eine bevorzugt berührungslose Positions-Erfassung und/oder eine bevorzugt berührungslose Ausrichtungs-Erfassung aufweisen, die etwaig ohne ein eigenes Erfassungsmittel (29) auskommt. Beispielsweise kann eine (momentane) Ist-Position und/oder eine (momentane) Ist-Orientierung einer Batteriezelle (2,3) und/oder eines Warenträgers (21,21') von einer externen Datenquelle bezogen oder auf Basis eines externen Datenbezugs geschätzt werden.

Ein Warenträger (21,21') ist bevorzugt dazu ausgebildet, eine Batteriezelle (2,3), insbesondere genau eine Batteriezelle (2,3) in einer vorgegebenen Referenzlage (R) aufzunehmen und zu halten. Die Referenzlage (R) kann insbesondere gegenüber einer Bezugsstruktur (28) des Warenträgers (21,21') definiert sein. Die Referenzlage (R) kann etwaig in unterschiedlichen Richtungen, insbesondere in der Vorlaufrichtung (X) und in der Querrichtung (Y) unterschiedliche Anteile und insbesondere unterschiedliche Genauigkeiten für die Referenzlage (R) vorsehen. Weiter unten wird eine bevorzugte Ausführungsvariante eines Warenträgers (21) erläutert.

Das Erfassungsmittel (29) bzw. die Positions-Erfassung und/oder Ausrichtungs-Erfassung ist/sind bevorzugt dazu ausgebildet, eine relative Ist-Position und/oder eine relative Ist-Ausrichtung einer Batteriezelle (2,3) gegenüber einem Warenträger (21), in welchem die Batteriezelle (2,3) aufgenommen und gehalten ist, zu erfassen. Diese relative Ist-Position oder relative Ist-Ausrichtung kann insbesondere nur einmalig innerhalb der Förderstrecke zwischen dem Zuführbereich (5) und dem Übergabebereich (6) erfolgen, bevorzugt an oder in Vorlaufrichtung (X) kurz nach dem ersten Transferpunkt (18). Infolge der haltenden Aufnahme der Batteriezelle (2,3) innerhalb des Warenträgers (21) kann die relative Ist-Position und/oder relative Ist-Ausrichtung für den weiteren Förderweg konstant sein oder als konstant angenommen werden.

Eine absolute Ist-Position und/oder eine absolute Ist-Ausrichtung eines Warenträgers (21) kann zusätzlich an verschiedenen Stellen der Förderstrecke erfasst und/oder exakt vorgeben werden.

Natürlich ist es alternativ oder zusätzlich möglich, an nur einer oder an mehreren Stellen der Förderstrecke insbesondere im Bereich des mindestens einen Hilfsfördermittels (20), eine absolute Ist-Position und/oder eine absolute Ist-Ausrichtung einer Batteriezelle (2,3) und/oder eines Warenträgers (21,21') gegenüber der Vorbereitungslinie (1) zu erfassen. Hierfür können ggf. zusätzliche Erfassungsmittel oder Datenbezüge von externen Erfassungseinrichtungen vorgesehen sein.

In dem Beispiel der Figuren 1 und 2 wird im Einlaufbereich an oder hinter dem ersten Transferpunkt (18) eine berührungslose Erfassung der dortigen Ist-Position einer Batteriezelle (2,3) als relative Ist-Position der Batteriezelle (2,3) gegenüber mindestens einer Bezugsstruktur (28) des Warenträgers (21) ermittelt, in welchem die jeweilige Batteriezelle (2,3) aufgenommen und gehalten ist.

Die relative Ist-Position wird insbesondere für jede Batteriezelle (2,3) separat erfasst und gespeichert. Der Warenträger (21) wird zumindest im Bereich eines Hilfsfördermittels (20) und insbesondere eines Magnetlinearförderers (25) mit einer exakten Ist-Bewegung geführt, wobei ein Linearmotor, insbesondere mit mindestens einem Magneten (22) an einem Warenträger (21) zusammenwirkt. Die Ist-Bewegung wird bevorzugt durch den Linearmotor zumindest hinsichtlich der momentanen Ist-Geschwindigkeit exakte gesteuert oder geregelt. Darüber hinaus kann eine momentane Ist-Position entlang der Vorlaufrichtung (X) durch den Linearmotor (25) exakt gesteuert oder geregelt sein. Die Steuerung oder Regelung der Ist-Position (PI) eines Warenträgers (21) kann gemäß der bekannten relativen Ist-Position der Batteriezelle (2,3) in Bezug auf diesen Warenträger (21) derart erfolgen, dass die absolute Ist-Position der Batteriezelle (2,3) entlang der Vorlaufrichtung (X) an die jeweiligen Prozessanforderungen einer Vorbereitungs-Prozessstation (9) angepasst ist.

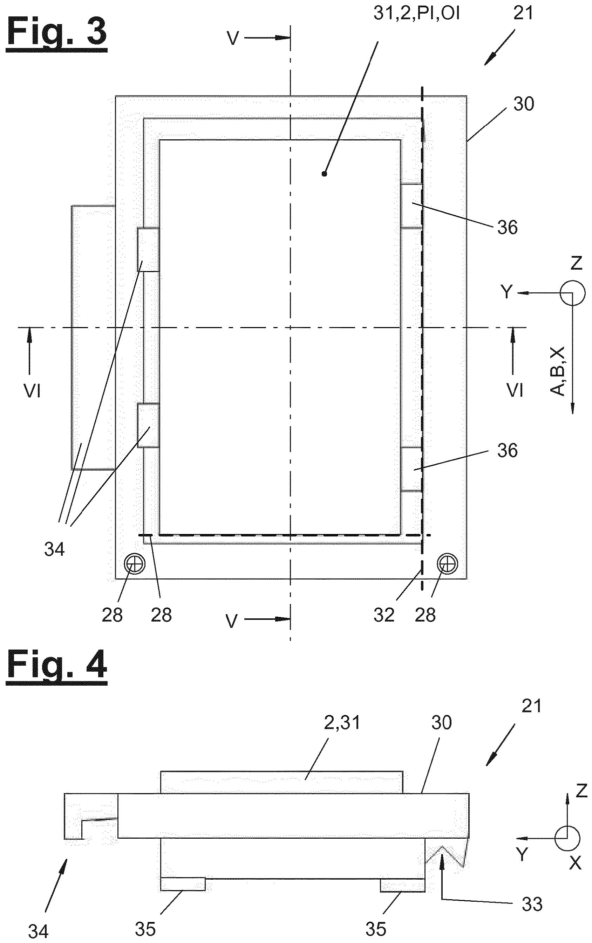

Figuren 3 bis 6 zeigen einen Warenträger gemäß der vorliegenden Offenbarung in einer bevorzugten Ausführung.

Der Warenträger (21) ist zur Verwendung in einer Batteriezellen-Vorbereitungslinie (1) gem. der vorliegenden Offenbarung ausgebildet. Er weist einen Grundkörper (30) mit einem Aufnahmenest (31) für die Aufnahme einer Batteriezelle (2,3) auf. In dem Beispiel von Figur 3 ist eine Draufsicht auf den Warenträger (21) mit einer aufgenommenen Batteriezelle (2) gezeigt. Der Warenträger und insbesondere der Grundkörper (30) weist mind. eine Anlagestruktur (32) auf, die einen Anschlag für eine passgenaue Aufnahme einer Batteriezelle (2,3) bildet. In dem gezeigten Beispiel ist die Anlagestruktur (32) durch eine Anlagekante oder Anlagewand gebildet, gegen welche die in dem Aufnahmenest (31) eingebrachte Batteriezelle (2,3) anlegbar ist. Hier sind Anschlusskontakte (36) der Batteriezelle (2,3) in anliegenden Kontakt mit der Anlagestruktur (32). Alternativ kann eine beliebige andere Kontur oder körperliche Struktur der Batteriezelle die Anlagestruktur (32) kontaktieren.

Der Warenträger (21) weist ein Haltemittel (34) auf, das die Batteriezelle (2,3) in der eingesetzten Lage am Warenträger (21) fixiert. Die Fixierung erfolgt bevorzugt durch ein selbstschließendes Mittel und weiterhin bevorzugt in einer Referenzlage und/oder unter Vorspannung gegen die mind. eine Anlagestruktur (32). Das Haltemittel (34) ist in dem gezeigten Beispiel als selbst schließendes Haltemittel ausgebildet. Es weist einerseits eine Spannleiste auf, die durch externe Einwirkung betätigbar ist, um die Spann- und Haltefunktion zu lösen oder zu aktivieren. An der Spannleiste kann beispielsweise eine Kulissenführung vorgesehen sein. Wenn die Kulissenführung in einer Basisstellung bzw. in einer aktiven Stellung ist, werden ein oder mehrere Andrückstempel des Haltemittels (34) gegen die Batteriezelle (2,3) gepresst, und zwar insbesondere in Richtung zu der Anlagestruktur (32) hin. Wenn die Spannleiste bzw. Kulisse in eine inaktive bzw. spannungsfreie Stellung gebracht wird, werden die ein oder mehreren Andrückstempel kraftfrei gestellt und/oder von der Batteriezelle (2,3) entfernt.

Das Haltemittel (34) und/oder das Aufnahmenest (31) können einstellbar oder auswechselbar sein, um den Warenträger für die Aufnahme unterschiedlicher Arten von Batteriezellen (2,3) anzupassen.

Der Warenträger (21) weist bevorzugt eine Leitstruktur (33) auf, die eine Anpassung der Ist-Position (PI) und/oder eine Anpassung der Ist-Ausrichtung (OI) des Warenträgers (21,21') gegenüber der Vorbereitungslinie (1) ermöglicht oder unterstützt. In den gezeigten Beispielen ist die Leitstruktur (33) durch eine Führungskante oder Führungsnut gebildet, die beispielsweise eine Erstreckung in der Förderrichtung bzw. Vorlaufrichtung (X) hat. Durch einen Kontakt zwischen der Leitstruktur (33) eines Warenträgers (21) mit einer Führungshilfe der Vorbereitungslinie (1), beispielsweise einer Führungsschiene, kann eine momentane Ist-Position des Warenträgers zumindest in der Querrichtung (Y) festgelegt und insbesondere auf den Wert einer Soll-Position in Querrichtung (Y) eingestellt werden. Die in den Figuren illustrierte Referenzlage der Batteriezelle (2,3), die insbesondere durch die mind. eine Anlagestruktur (32) und/oder das Haltemittel (34) und/oder das Aufnahmenest (31) vorgebbar ist, bewirkt eine Vorgabe und insbesondere exakte Vorgabe der relativen Ist-Position einer Batteriezelle (2,3) in der Querrichtung (Y) gegenüber dem Warenträger (21), in welchen die Batteriezelle (2,3) aufgenommen ist. Durch die Referenzlage und die Leitstruktur (33) an einem Warenträger (21) kann somit eine in einem Warenträger (21) aufgenommene Batteriezelle (2,3) auch hinsichtlich der absoluten Ist-Position (PI) in Querrichtung (Y) geführt werden, so dass die absolute Ist-Position (PI) auf den Wert einer Soll-Position eingestellt wird.

Ggf. kann das Führungsmittel und insbesondere die oben erwähnte Führungsschiene der Vorbereitungslinie (1) in der Querrichtung (Y) einstellbar und/oder gesteuert bzw. geregelt positionierbar sein. Auf diese Weise kann auch die absolute Ist-Position (PI) des Warenträgers (21) und/oder einer aufgenommenen Batteriezelle (2,3) in der Querrichtung (Y) gesteuert oder geregelt werden.

Die Leitstruktur (33), insbesondere die erwähnte Führungskante oder Führungsnut kann ein oder mehrfach vorhanden sein. Bevorzugt bestehen mind. zwei Kontaktpunkte zwischen der Leitstruktur (33) und dem Führungsmittel der Vorbereitungslinie (1), wobei die Kontaktpunkte derart angeordnet sind, dass durch das Führungsmittel auch eine absolute Ist-Orientierung (OI) einstellbar und insbesondere steuerbar oder regelbar ist.

In den Beispielen der Figuren ist eine relative Ist-Position (PI) der Batteriezelle (2,3) entlang der Vorlaufrichtung (X) gegenüber einem Warenträger (21) in einem gewissen Umfang variabel. Es ist daher bevorzugt, dass durch die Ist-Positionserfassung bzw. das Erfassungsmittel (29) zumindest eine relative Ist-Position (PI) und/oder eine relative Ist-Ausrichtung (OI) einer Batteriezelle (2,3) gegenüber dem Warenträger (21), in welchen die Batteriezelle (2,3) aufgenommen ist, erfasst wird. Dies erfolgt insbesondere bevorzugt durch die Erfassung von Bezugsstrukturen (28) einerseits an der Batteriezelle (2,3) und andererseits an dem Warenträger (21). Die Bezugsstrukturen können eine beliebige Ausbildung haben. Die Bezugsstrukturen (28) an der Batteriezelle (2,3) und an dem Warenträger (21) können jeweils unterschiedliche oder gleiche Ausbildungen haben. Sie können insbesondere jeweils ausgebildet sein als optischer Marker, als magnetischer Marker oder als elektromagnetischer Marker. In der Illustration von Figur 3 ist eine erkennbare Bezugsstruktur (28) der Batteriezelle (2,3) eine in der Vorlaufrichtung (X) vorauseilende Kante eines Grundkörpers der Batteriezelle (2,3). An dem Warenträger (21) sind zwei optische Marker vorgesehen, die beispielsweise durch ein Vision System, insbesondere eine Kamera mit einer Bilderfassungstechnik erfassbar sind. Durch die Positionserfassung kann insbesondere eine relative Lage der vorgenannten Bezugsstrukturen (28) erfasst und ausgewertet werden, um hieraus die (momentane) relative Ist-Position der Batteriezelle (2,3) gegenüber dem Warenträger (21) zu ermitteln, insbesondere entlang der Vorlaufrichtung (X).

Mind. eine Prozessstation (9) und insbesondere ein Prozessorgan (11,13,15,17) kann bevorzugt in Abhängigkeit von der erfassten oder in sonstiger Weise bekannten Ist-Position (PI) und/oder Ist-Ausrichtung (OI) einer Batteriezelle (2,3) gesteuert oder geregelt werden. Dies kann insbesondere die momentane Ist-Position (PI) entlang der Vorlaufrichtung (X) und eine Ist-Ausrichtung (OI) einer Batteriezelle betreffen. Die Steuerung oder Regelung der Prozessstation (9) und/oder des Prozessorgans (11,13,15,17) kann insbesondere in Abhängigkeit von einer erfassten relativen Ist-Position und/oder einer erfassten relativen Ist-Ausrichtung einer Batteriezelle (2,3) gegenüber einem Warenträger (21) erfolgen. Die Steuerung oder Regelung kann vorsehen, dass das Prozessorgan seine Einwirkung auf die Batteriezelle (2,3) genau zu dem Zeitpunkt beginnt, zu dem die zu bearbeitende Kontur oder Fläche gem. der Zwischen-Förderbewegung (B) an der Einwirkzone des Prozessorgans (11,13,15,17) ankommt bzw. solange die Batteriezelle den Einwirkbereich passiert.

Durch die vorgenannte Steuerung oder Regelung kann beispielsweise erreicht werden, dass eine als selbstklebende Schicht aufzubringende Isolierung exakt auf der Oberfläche der Batteriezelle (2,3) positioniert wird, selbst wenn die relative Ist-Position und/oder die relative Ist-Ausrichtung der Batteriezelle (2,3) gegenüber dem Warenträger (21), in welchen die Batteriezelle (2,3) aufgenommen und gehalten ist, gewissen Toleranzen unterliegt.

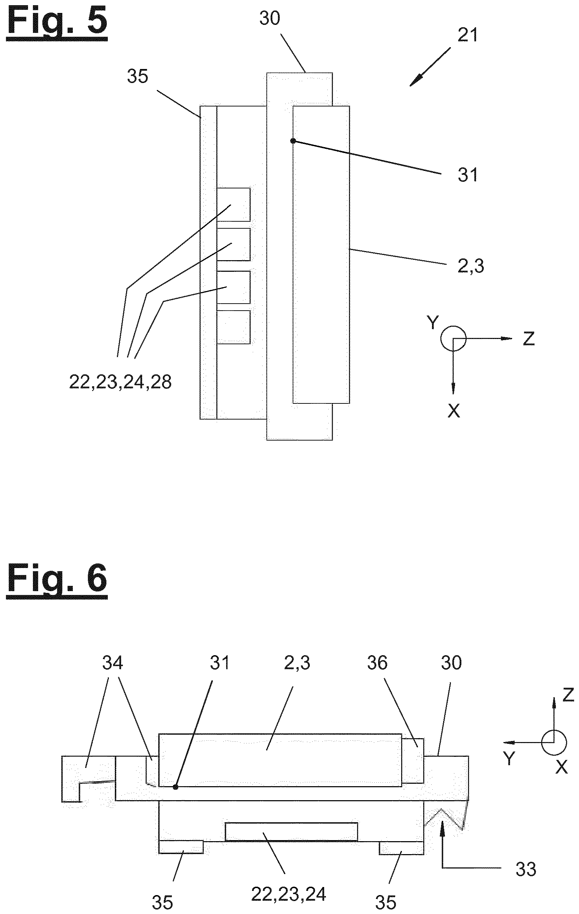

Der Warenträger (21) umfasst gem. Darstellung in Figuren 5 und 6 bevorzugt mind. einen Magneten (22), der mit einem Magnetlinearförderer und insbesondere einem Linearmotor (25) eines Hilfsfördermittels (20) zusammenwirkt. In dem Beispiel von Figuren 5 und 6 sind zwei oder mehr Permanentmagnete an der Unterseite bzw. an oder im unteren Teil des Warenträgers (21) angeordnet. Die Anordnung kann demgegenüber unterschiedlich gewählt sein. Bevorzugt sind der ein oder die mehreren Magnete (22), an derjenigen Seite des Warenträgers (21) bzw. des Grundkörpers (30) angeordnet, die in Wirkkontakt oder in Wirkverbindung mit dem Magnetlinearförderer bzw. Linearmotor (25) gelangt. Der Wirkkontakt kann ein direkter, d.h. körperlich berührender Kontakt oder ein indirekter berührungsloser Kontakt sein, der beispielsweise durch Fernkräfte über einen Luftspalt wirkt.

Für die Förderung eines Warenträgers (21) an dem Hauptfördermittel (8) können ggf. separate Kontaktierungsbereiche vorgesehen sein. In den Figuren sind dies beispielhaft zwei an den unteren Außenkanten des Warenträgers entlang der Vorlaufrichtung (X) orientierte Tragflächen bzw. Kufen (35).

Die ein oder mehreren Magnete (22) des Warenträgers können gem. dem gezeigten Beispiel ausschließlich Permanentmagnete (23) und/oder Elektromagnete (24) sein.

Zumindest einer der Magnete (22,23,24) kann als eine Bezugsstruktur (28) nutzbar sein, über welche eine momentane Ist-Position (PI) eines Warenträgers (21) gegenüber einem Hilfsfördermittel (20) und insbesondere einem gegenüber einem Magnetlinearförderer (25) feststellbar ist.

Der Magnetlinearförderer (25) bzw. der Linearmotor ist bevorzugt dazu ausgebildet, über das Zusammenwirken mit dem mind. einen Magneten eines Warenträgers (21) eine momentane Ist-Position des Warenträgers (21) zumindest entlang der Vorlaufrichtung (X) zu steuern und bevorzugt zu regeln. Der Magnetlinearförderer oder ein separates Erfassungsmittel kann ferner dazu ausgebildet sein, eine momentane Ist-Position (PI) eines Warenträgers (21) zumindest entlang der Vorlaufrichtung (X) zu erfassen, und zwar basierend auf der Erfassung des mind. einen Magneten (22) als Bezugsstruktur (28).

Alternativ kann ein anderes magnetisch oder elektromagnetisch wirkendes Mittel als eine zusätzliche Bezugsstruktur (28) vorgesehen sein.

Abwandlungen der Erfindung sind in verschiedener Weise möglich. Insbesondere können alle zu den verschiedenen Ausführungsvarianten beschriebenen, beanspruchten oder gezeigten Merkmale in beliebiger Weise miteinander kombiniert, gegeneinander ersetzt oder weggelassen werden.

Ein Warenträger (21) kann eine Codierung oder ein Identifizierungsmittel aufweisen. Die Codierung bzw. das Identifizierungsmittel ist bevorzugt dazu ausgebildet, einen Warenträger (21) eindeutig gegenüber anderen Warenträgern unterscheidbar zu machen. Die Codierung oder das Identifizierungsmittel kann bevorzugt in dem Batteriezellen-Vorbereitungsverfahren bzw. an der Vorbereitungslinie (1) einfach oder mehrfach erfasst werden. Insbesondere können die weiteren erfassten Informationen der Codierung bzw. dem Identifizierungsmerkmal des Warenträgers (21) zugeordnet werden. Dies kann insbesondere in einer geordneten Datenstruktur erfolgen, die beispielsweise in einer Steuerung der Vorbereitungslinie (1) verwaltet wird. Alternativ oder zusätzlich können die verschiedenen erfassten Daten, und insbesondere eine erfasste relative Ist-Position (PI) und/oder eine erfasste relative Ist-Ausrichtung (OI) an oder in dem Identifizierungsmittel gespeichert werden.

Die gespeicherten Erfassungsdaten werden bevorzugt für die Steuerung oder Regelung eines Prozessorgans (11,13,15,17) abgefragt bzw. ausgelesen und verarbeitet. Sie können dabei zusätzlich mit erfassten, geschätzten oder exakt vorgegebenen Informationen über eine Ist-Position oder Ist-Ausrichtung eines Warenträgers (21) kombiniert werden.

Das Hilfsfördermittel (20), insbesondere der Magnetlinearförderer, ist bevorzugt dazu ausgebildet, die Ist-Bewegung eines Warenträgers (21) und/oder einer Batteriezelle (2, 3) an eine Soll-Bewegung anzupassen. Die Anpassung der Ist-Bewegung erfolgt insbesondere durch Steuerung oder Regelung der Ist-Position (PI) und/oder der Ist-Geschwindigkeit (VI) und/oder der Ist-Ausrichtung (OI) des Warenträgers (21) oder der Batteriezelle (2, 3). Besonders bevorzugt weist die Vorbereitungslinie ein Quer-Führungsmittel auf, durch das die Ist-Position eines Warenträgers (21) und/oder einer Batteriezelle (2, 3) in der Querrichtung (Y) steuerbar oder einstellbar ist, insbesondere zur Erreichung einer Soll-Position in Querrichtung (Quer-Positionsregelung). Die Soll-Position in Querrichtung kann fest vorgegeben oder veränderlich sein. Das Quer-Führungsmittel ist bevorzugt als steuerbares und insbesondere regelbares Quer-Führungsmittel ausgebildet. Es kann sich bei dem Quer-Führungsmittel um die oben erwähnte Führungsschiene handeln oder um ein anderes geeignetes Mittel.

Alternativ oder zusätzlich weist die Vorbereitungslinie ein dynamisches Längs-Positioniermittel auf, durch das die (momentane) Ist-Position eines Warenträgers (21) und/oder einer Batterie (2, 3) in der Längsrichtung bzw. Vorlaufrichtung (X) steuerbar oder einstellbar ist, insbesondere zur Erreichung einer Soll-Position in Längsrichtung (Längs-Positionsregelung). Die Soll-Position in Längsrichtung kann für einen oder mehrere Zeitpunkte bzw. Zeitabschnitte nach einem festen Schema vorgegeben sein. Alternativ oder zusätzlich kann die (momentane) Soll-Position in Längsrichtung dynamisch festgelegt bzw. veränderlich sein. Das Längs-Positioniermittel ist bevorzugt als steuerbares und insbesondere regelbares Längs-Positioniermittel ausgebildet. Es kann sich bei dem Längs-Positioniermittel um eine Positionssteuerung oder Positionsregelung des oben erwähnten Magnetlinearförderers, insbesondere des Linearmotors, handeln oder um ein anderes geeignetes Mittel.

Ein Transferpunkt (18, 19) kann beliebig ausgebildet sei. Gemäß einer ersten Ausführung wird an einem ersten Transferpunkt (18) eine Roh-Batteriezelle (2) direkt auf der Förderstrecke des Hauptfördermittels angeordnet, insbesondere unter direkter Ablage auf dem Förderelement (26) des Hauptfördermittels (8). An einem zweiten Transferpunkt (19) wird eine vorbereitete Batteriezelle (3) direkt von der Förderstrecke des Hauptfördermittels (8) abgenommen.

Alternativ kann an einem ersten Transferpunkt (18) eine Roh-Batteriezelle (2, 3) auf oder an einem Warenträger (21') abgelegt werden, bevorzugt unter Einbringung in das Aufnahmenest (31). Der Warenträger (21, 21') kann sich zum Zeitpunkt bzw. während der Ablage auf der (eingangsseitigen) Förderstrecke des Hauptfördermittels (8), im Übergang von einer Förderstrecke des Hauptfördermittels (8) zu einer (eingangsseitigen) Förderstrecke eines Hilfsfördermittels (20) oder bereits auf der Förderstrecke des Hilfsfördermittels (20) befinden. Ebenso kann an einem zweiten Transferpunkt (19) eine vorbereitete Batteriezelle (3) von einem Warenträger (21) abgenommen werden. Der Warenträger (21) kann sich zum Zeitpunkt bzw. während der Abnahme auf der (ausgangsseitigen) Förderstrecke des Hilfsfördermittels (20), im Übergang von einer Förderstrecke eines Hilfsfördermittels (20) zu einer (ausgangsseitigen) Förderstrecke des Hauptfördermittels (8) oder bereits auf der Förderstrecke des Hauptfördermittels (8) befinden.

An einem Transferpunkt (18, 19) und insbesondere an beiden Transferpunkten (18, 19) kann eine (separate) Transfervorrichtung angeordnet sein, um eine Bewegung der Batteriezelle zwischen dem Zuführbereich (5) und der Vorbereitungslinie bzw. zwischen der Vorbereitungslinie und dem Übergabebereich (6) auszulösen oder durchzuführen. Alternativ kann an einem Transferpunkt (18, 19) ohne ergänzende Vorrichtungsmittel die Ablage bzw. Zuführung einer Roh-Batteriezelle (2) und/oder die Abnahme bzw. Übergabe einer vorbereiteten Batteriezelle (3) erfolgen.

### BEZUGSZEICHENLISTE

- 1: Batteriezellen-Vorbereitungslinie / Vorbereitungslinie
- 2: Batteriezelle / Roh-Batteriezelle
- 3: Batteriezelle / vorbereitete Batteriezelle
- 4: Linearförderer
- 5: Zuführbereich
- 6: Übergabebereich
- 7: Batteriemodulfertigung
- 8: Hauptfördermittel / Hauptförderstrecke (linear) / Kreislaufförderer
- 9: Vorbereitungs-Prozessstation(en) / Vorbereitungs-Prozess
- 10: Erste Prozessstation / Erster Prozess / Reinigungsvorrichtung / Oberflächenreinigung
- 11: Prozessorgan / Auftragvorrichtung für Reinigungsfluid / Entfernungsvorrichtung für Reinigungsfluid / Fluidauftrag und/oder Fluidentfernung
- 12: Dritte Prozessstation / Zweiter Prozess / Oberflächen-Behandlungsvorrichtung (chemische) / (Chemische) Oberflächenbehandlung
- 13: Prozessorgan / Plasma-Applikator / Strahlungs-Applikator
- 14: Zweite Prozessstation / Dritter Prozess / Material-Auftragsvorrichtung / Materialauftrag
- 15: Prozessorgan / Folien-Applikator / Klebeband-Applikator / Anstrichmittel-Applikator
- 16: Vierte Prozessstation / Vierter Prozess / Bestückungsvorrichtung / Bestückung
- 17: Prozessorgan / Distanzstück-Applikator / Klebeelement-Applikator
- 18: Transferpunkt / Einlauf / Einbringung
- 19: Transferpunkt / Auslauf / Ausbringung
- 20: Hilfsfördermittel / Hilfsförderstrecke (linear)
- 21: Warenträger / bestückter Warenträger
- 21': Warenträger / leerer Warenträger
- 22: Magnet
- 23: Permanentmagnet
- 24: Elektromagnet
- 25: Magnetlinearförderer / Linearmotor
- 26: Förderelement / Band, bevorzugt umlaufend
- 27: Förderantrieb, steuerbar
- 28: Bezugsstruktur / Optischer Marker / magnetischer oder elektromagnetischer Marker
- 29: Erfassungsmittel / berührungsloses Erfassungsmittel / berührungslose Positions- und/oder Ausrichtungs-Erfassung
- 30: Grundkörper
- 31: Aufnahmenest
- 32: Anlagestruktur / Anschlagpunkt(e) / Anschlagkante / Anschlagfläche
- 33: Leitstruktur / Führungskante / Führungsnut
- 34: Haltemittel (selbstschließend)
- 35: Tragfläche / Kufe
- 36: Anschlusskontakt
- A: Makro-Förderbewegung
- B: Zwischen-Förderbewegung
- PI: Ist-Position
- PS: Soll-Position
- OI: Ist-Ausrichtung / Ist-Orientierung
- OS: Soll-Ausrichtung / Soll-Orientierung
- R: Referenzlage
- VI: Ist-Geschwindigkeit
- VS: Soll-Geschwindigkeit
- X: Längsrichtung / Vorlaufrichtung / horizontal
- X': Rücklaufrichtung / horizontal
- Y: Querrichtung / horizontal
- Z: Vertikalrichtung / oben

## Patentansprüche

1. Batteriezellen-Vorbereitungslinie zur Vorbereitung von einer oder mehreren Roh-Batteriezellen (2) für eine Batteriemodulfertigung (7), wobei die Vorbereitungslinie (1) einen Linearförderer (4) umfasst, der mindestens eine Roh-Batteriezelle (2) von einem Zuführbereich (5) zu einer oder mehreren Vorbereitungs-Prozessstationen (9) bewegt, die entlang der Vorbereitungslinie (1) angeordnet sind, und vorbereitete Batteriezellen (3) weiter zu einem Übergabebereich (6) bewegt, **dadurch gekennzeichnet, dass** die Vorbereitungslinie aufweist:
- ein Hauptfördermittel (8) zur Batteriezellen-Bewegung, wobei das Hauptfördermittel (8) dazu ausgebildet ist, die mindestens eine Batteriezelle (2, 3) und/oder einen Warenträger (21), der zur Aufnahme einer Batteriezelle (2, 3) ausgebildet ist, bei einer konstanten Makro-Förderbewegung (A) zu transportieren, insbesondere bei einer an den Transferpunkten (18, 19) zum Zuführbereich (5) und zum Übergabebereich (6) konstanten Fördergeschwindigkeit und/oder Fördertaktung,
- mindestens ein Hilfsfördermittel (20), das in der Förderstrecke des Hauptfördermittels (8) zwischengeschaltet ist,
- wobei das Hilfsfördermittel (20) dazu ausgebildet ist, mindestens eine Batteriezelle (2, 3) und/oder einen Warenträger (21), der zur Aufnahme einer Batteriezelle (2, 3) ausgebildet ist, mit einer Zwischen-Förderbewegung (B) zu transportieren, die von der Makro-Förderbewegung (A) temporär abweicht, sodass eine Batteriezelle (2, 3) entlang der Förderstrecke des Hilfsfördermittels (20) zu einer Vorbereitungs-Prozessstation (9) mit einer solchen Geschwindigkeit führbar ist, dass die momentane Bewegung der Batteriezelle (2, 3) und/oder eines Warenträgers (21) den Prozessanforderungen dieser Vorbereitungs-Prozessstation (9) angepasst ist.

2. Batteriezellen-Vorbereitungslinie nach Anspruch 1, wobei die Vorbereitungslinie (1) einen oder mehrere Warenträger (21) zur Aufnahme von einer oder mehreren Batteriezellen (2, 3), insbesondere jeweils genau einer Batteriezelle (2, 3), aufweist.

3. Batteriezellen-Vorbereitungslinie nach Anspruch 1 oder 2, wobei ein Hilfsfördermittel (20) als Magnetlinearförderer ausgebildet ist, insbesondere als Linearmotor (25), der mit mindestens einem Magneten (22, 23, 24) eines Warenträgers (21) zusammenwirkt.

4. Batteriezellen-Vorbereitungslinie nach einem der vorhergehenden Ansprüche, wobei das Hauptfördermittel (8) als Kreislaufförderer ausgebildet ist, der einen oder mehrere Warenträger (21), insbesondere bestückte Warenträger, in einer bevorzugt linearen Vorlaufrichtung (X) vom Zuführbereich (5) zum Übergabebereich (6) fördert, und weiterhin in einer Rücklaufrichtung (X') Warenträger (21), insbesondere leere Warenträger (21'), vom Übergabereich (6) zum Zuführbereich (5) retourniert, wobei das Hauptfördermittel (8) insbesondere ein umlaufendes Förderelement (26) aufweist.

5. Batteriezellen-Vorbereitungslinie nach einem der vorhergehenden Ansprüche, wobei ein Warenträger (21, 21') dazu ausgebildet ist, eine Batteriezelle (2, 3) in einer vorgegebenen Referenzlage (R) gegenüber einer Bezugsstruktur (28) des Warenträgers (21, 21') aufzunehmen und zu halten.

6. Batteriezellen-Vorbereitungslinie, nach einem der vorhergehenden Ansprüche, wobei die Batteriezellen-Vorbereitungslinie (1) mindestens ein Erfassungsmittel (29) aufweist, das dazu ausgebildet ist, eine Ist-Position (PI) und/oder eine Ist-Ausrichtung (OI) einer Batteriezelle (2, 3) und/oder eines Warenträgers (21, 21') zu erfassen, insbesondere eine relative Ist-Position oder relative Ist-Ausrichtung einer Batteriezelle (2, 3) gegenüber einem Warenträger (21), in welchem die Batteriezelle (2, 3) aufgenommen und gehalten ist, und/oder eine absolute Ist-Position und/oder absolute Ist-Ausrichtung einer Batteriezelle (2, 3) und/oder eines Warenträgers (21, 21') gegenüber der Batteriezellen-Vorbereitungslinie (1), wobei die Erfassung bevorzugt berührungslos erfolgt.

7. Batteriezellen-Vorbereitungslinie nach einem der vorhergehenden Ansprüche, wobei das Hilfsfördermittel (20), insbesondere der Magnetlinearförderer, dazu ausgebildet ist, die Ist-Bewegung eines Warenträgers (21) oder einer Batteriezelle (2, 3) an eine Soll-Bewegung anzupassen, insbesondere die Ist-Position (PI) und/oder die Ist-Geschwindigkeit (VI) und/oder die Ist-Ausrichtung (OI) des Warenträgers (21) oder der Batteriezelle (2, 3) zu steuern oder zu regeln.

8. Batteriezellen-Vorbereitungslinie nach einem der vorhergehenden Ansprüche, wobei mindestens ein Prozessorgan (11, 13, 15, 17) einer Vorbereitungs-Prozessstation (9) in Abhängigkeit von einer Ist-Position (PI) und/oder Ist-Ausrichtung (OI) einer Batteriezelle (2, 3) gesteuert oder geregelt ist, insbesondere in Abhängigkeit von einer relativen Ist-Position und/oder relativen Ist-Ausrichtung einer Batteriezelle (2, 3) gegenüber einem Warenträger (21), in welchem die Batteriezelle (2, 3) aufgenommen und gehalten ist.

9. Batteriezellen-Vorbereitungslinie nach einem der vorhergehenden Ansprüche, wobei mindestens eine Vorbereitungs-Prozessstation (9) derart an der Batteriezellen-Vorbereitungslinie (1) und insbesondere an der Förderstrecke eines Hilfsfördermittels (20) angeordnet ist, dass ein Prozessorgan (11, 13, 15, 17) der Vorbereitungs-Prozessstation (9) im Wesentlichen von oben auf eine Batteriezelle (2, 3) einwirkt, die durch das Hilfsfördermittel (20) an dem jeweiligen Prozessorgan (11, 13, 15, 17) entlang bewegt ist, wobei insbesondere die Vorbereitungs-Prozessstation (9) und/oder deren Prozessorgan (11, 13, 15, 17) stationär angeordnet ist.

10. Batteriezellen-Vorbereitungslinie nach einem der vorhergehenden Ansprüche, wobei mindestens eine pVorbereitungs-Prozessstation (9) ausgebildet ist als:
- Reinigungsvorrichtung (10), die eine Oberfläche einer Batteriezelle (2, 3) von Verschmutzungen befreit, insbesondere durch Auftrag und etwaig nachfolgende Entfernung eines Reinigungsfluids; ODER als
- Oberflächen-Behandlungsvorrichtung (12), die auf ein Oberflächenmaterial einer Batteriezelle (2, 3) einwirkt, insbesondere durch Aufbringen von Plasma oder Strahlung; ODER als
- Material-Auftragsvorrichtung (14), die ein Zusatzmaterial auf eine Oberfläche einer Batteriezelle (2, 3) aufträgt, insbesondere einen Klebstoff, ein Isoliermittel, ein Dichtungsmittel, ein Distanzelement; ODER als
- Bestückungsvorrichtung (16), die eine Bestückung auf eine Oberfläche einer Batteriezelle (2, 3) aufträgt, insbesondere eine Distanzfolie oder ein Distanzstück.

11. Warenträger zur Verwendung in einer Batteriezellen-Vorbereitungslinie (1) gemäß einem der vorhergehenden Ansprüche, wobei der Warenträger (21, 21') aufweist:
- Einen Grundkörper (30) mit einem Aufnahmenest (31) für die Aufnahme von einer oder mehreren Batteriezellen (2, 3), insbesondere für die Aufnahme von genau einer Batteriezelle (2, 3);
- Mindestens eine Anlagestruktur (32), die einen Anschlag für eine passgenaue Aufnahme einer Batteriezelle (2, 3) bildet,
**dadurch gekennzeichnet, dass** der Warenträger weiterhin aufweist:
- Mindestens einen Magneten (22, 23, 24), der mit einem Magnetlinearförderer, insbesondere einem Linearmotor (25) eines Hilfsfördermittels (20) der Batteriezellen-Vorbereitungslinie (1) zusammenwirkt; UND/ODER
- Eine Bezugsstruktur (28), die eine bevorzugt berührungslose Erfassung der Ist-Position (PI) und/oder Ist-Ausrichtung (OI) des Warenträgers (21, 21') durch ein Erfassungsmittel (29) der Batteriezellen-Vorbereitungslinie (1) ermöglicht oder unterstützt, insbesondere einen optischen oder elektromagnetischen Marker; UND/ODER
- Eine Leitstruktur (33), die eine Anpassung der Ist-Position (PI) und/oder eine Anpassung der Ist-Ausrichtung (OI) des Warenträgers (21, 21') gegenüber der Batteriezellen-Vorbereitungslinie (1) ermöglicht oder unterstützt, insbesondere eine Führungskante oder Führungsnut; UND/ODER
- Ein bevorzugt selbstschließendes Haltemittel (34), das eine Batteriezelle (2, 3) in einer eingesetzten Lage an dem Warenträger (21) fixiert, insbesondere in einer Referenzlage und/oder unter Vorspannung gegen die mindestens eine Anlagestruktur (32);

12. Batteriezellen-Vorbereitungsverfahren zur Vorbereitung und Bereitstellung mindestens einer Batteriezelle (2, 3) für eine Batteriemodulfertigung (7), wobei die mindestens eine Batteriezelle als Roh-Batteriezelle (2) in einer Batteriezellen-Vorbereitungslinie (1) von einem Zuführbereich (5) zu einer oder mehreren Vorbereitungs-Prozessstationen (9) bewegt wird und als vorbereitete Batteriezelle (3) weiter zu einem Übergabebereich (6) bewegt wird, **gekennzeichnet durch** die folgenden Schritte:
- Transportieren der Batteriezelle (2, 3) und/oder eines Warenträgers (21), der zur Aufnahme einer Batteriezelle (2, 3) ausgebildet ist, bei einer konstanten Makro-Förderbewegung (A), insbesondere bei einer an den Transferpunkten (18, 19) zum Zuführbereich (5) und zum Übergabebereich (6) konstanten Fördergeschwindigkeit und/oder Fördertaktung, durch ein Hauptfördermittel (8),
- Im Bereich von mindestens einer Hilfsförderstrecke (20), die nur einen Teilabschnitt der Batteriezellen-Vorbereitungslinie (1) zwischen dem Zuführbereich (5) und dem Übergabebereich (6) umfasst: Transportieren der Batteriezelle (2, 3) und/oder des Warenträgers (21) bei einer Zwischen-Förderbewegung (B), die von der Makro-Förderbewegung (A) temporär abweicht, durch mindestens ein Hilfsfördermittel (20), sodass die Batteriezelle (2, 3) oder der Warenträger (21) entlang der Hilfsförderstrecke (20) einem Vorbereitungs-Prozess (9) mit einer solchen Geschwindigkeit zuführbar ist, dass die momentane Bewegung der Batteriezelle (2, 3) den Anforderungen dieses Vorbereitungs-Prozesses (9) angepasst ist.

13. Batteriezellen-Vorbereitungsverfahren nach dem vorhergehenden Anspruch, wobei der Vorbereitungsprozess (9) von oben auf eine Oberfläche einer bewegten Batteriezelle (2, 3) einwirkt und insbesondere durch ein stationär angeordnetes Prozessorgan (11, 13, 15, 17) ausgeführt wird.

14. Batteriezellen-Vorbereitungsverfahren nach einem der vorhergehenden Ansprüche, wobei eine Batteriezelle (2, 3) in einem Warenträger (21) aufgenommen und gemeinsam mit dem Warenträger (21) bewegt wird.

15. Batteriezellen-Vorbereitungsverfahren nach einem der vorhergehenden Ansprüche, wobei die Batteriezellen-Vorbereitungslinie (1) und/oder ein Warenträger (21) nach einem der vorhergehenden Ansprüche ausgebildet ist.

## Claims

1. Battery cell preparation line for preparing one or more unprocessed battery cells (2) for battery module production (7), wherein the preparation line (1) comprises a linear conveyor (4) which moves at least one unprocessed battery cell (2) from a supply region (5) to one or more preparation process stations (9), which are arranged along the preparation line (1), and moves prepared battery cells (3) onwards to a transfer region (6), **characterized in that** the preparation line comprises:
- a main conveying means (8) for battery cell movement, wherein the main conveying means (8) is designed to transport the at least one battery cell (2, 3) and/or a product carrier (21), which is designed to receive a battery cell (2, 3), with a constant macro conveying movement (A), in particular at a constant conveying speed and/or conveying cycle at the transfer points (18, 19) to the supply region (5) and to the transfer region (6),
- at least one auxiliary conveying means (20), which is interposed in the conveying line of the main conveying means (8),
- wherein the auxiliary conveying means (20) is designed to transport at least one battery cell (2, 3) and/or a product carrier (21), which is designed to receive a battery cell (2, 3), with an intermediate conveying movement (B), which temporarily deviates from the macro conveying movement (A), such that a battery cell (2, 3) can be guided along the conveying line of the auxiliary conveying means (20) to a preparation process station (9) at such a speed that the momentary movement of the battery cell (2, 3) and/or of a product carrier (21) is adapted to the process requirements of this preparation process station (9).

2. Battery cell preparation line according to Claim 1, wherein the preparation line (1) has one or more product carriers (21) for receiving one or more battery cells (2, 3), in particular in each case exactly one battery cell (2, 3).

3. Battery cell preparation line according to Claim 1 or 2, wherein an auxiliary conveying means (20) is formed as a magnetic linear conveyor, in particular as a linear motor (25), which cooperates with at least one magnet (22, 23, 24) of a product carrier (21).

4. Battery cell preparation line according to one of the preceding claims, wherein the main conveying means (8) is formed as a circulating conveyor, which conveys one or more product carriers (21), in particular loaded product carriers, in a preferably linear feed direction (X) from the supply region (5) to the transfer region (6), and furthermore returns product carriers (21), in particular empty product carriers (21'), in a return direction (X') from the transfer region (6) to the supply region (5), wherein the main conveying means (8) in particular has a circulating conveying element (26).

5. Battery cell preparation line according to one of the preceding claims, wherein a product carrier (21, 21') is designed to receive and hold a battery cell (2, 3) in a predefined reference position (R) in relation to a reference structure (28) of the product carrier (21, 21').

6. Battery cell preparation line according to one of the preceding claims, wherein the battery cell preparation line (1) has at least one detection means (29), which is designed to detect an actual position (PI) and/or an actual orientation (OI) of a battery cell (2, 3) and/or of a product carrier (21, 21'), in particular a relative actual position or relative actual orientation of a battery cell (2, 3) in relation to a product carrier (21) in which the battery cell (2, 3) is received and held, and/or an absolute actual position and/or absolute actual orientation of a battery cell (2, 3) and/or of a product carrier (21, 21') in relation to the battery cell preparation line (1), wherein the detection is preferably effected contactlessly.

7. Battery cell preparation line according to one of the preceding claims, wherein the auxiliary conveying means (20), in particular the magnetic linear conveyor, is designed to adapt the actual movement of a product carrier (21) or of a battery cell (2, 3) to a setpoint movement, in particular to control or regulate the actual position (PI) and/or the actual speed (VI) and/or the actual orientation (OI) of the product carrier (21) or of the battery cell (2, 3).

8. Battery cell preparation line according to one of the preceding claims, wherein at least one process member (11, 13, 15, 17) of a preparation process station (9) is controlled or regulated in dependence on an actual position (PI) and/or actual orientation (OI) of a battery cell (2, 3), in particular in dependence on a relative actual position and/or relative actual orientation of a battery cell (2, 3) in relation to a product carrier (21) in which the battery cell (2, 3) is received and held.

9. Battery cell preparation line according to one of the preceding claims, wherein at least one preparation process station (9) is arranged on the battery cell preparation line (1) and in particular on the conveying line of an auxiliary conveying means (20) in such a way that a process member (11, 13, 15, 17) of the preparation process station (9) acts substantially from above on a battery cell (2, 3) which is moved along the respective process member (11, 13, 15, 17) by the auxiliary conveying means (20), wherein in particular the preparation process station (9) and/or its process member (11, 13, 15, 17) is arranged stationarily.

10. Battery cell preparation line according to one of the preceding claims, wherein at least one preparation process station (9) is formed as:
- a cleaning apparatus (10) which removes contaminants from a surface of a battery cell (2, 3), in particular by application and any subsequent removal of a cleaning fluid; OR as
- a surface treatment apparatus (12) which acts on a surface material of a battery cell (2, 3), in particular by application of plasma or radiation; OR as
- a material application apparatus (14) which applies an additional material to a surface of a battery cell (2, 3), in particular an adhesive, an insulating agent, a sealing agent, a spacer element; OR as
- a loading apparatus (16) which applies a loading item to a surface of a battery cell (2, 3), in particular a spacer film or a spacer.

11. Product carrier for use in a battery cell preparation line (1) according to one of the preceding claims, wherein the product carrier (21, 21') has:
- a main body (30) with a receiving nest (31) for receiving one or more battery cells (2, 3), in particular for receiving exactly one battery cell (2, 3);
- at least one abutment structure (32) which forms a stop for receiving a battery cell (2, 3) in an accurately fitting manner,
**characterized in that** the product carrier furthermore has:
- at least one magnet (22, 23, 24) which cooperates with a magnetic linear conveyor, in particular a linear motor (25) of an auxiliary conveying means (20) of the battery cell preparation line (1); AND/OR
- a reference structure (28) which enables or assists preferably contactless detection of the actual position (PI) and/or actual orientation (OI) of the product carrier (21, 21') by a detection means (29) of the battery cell preparation line (1), in particular an optical or electromagnetic marker; AND/OR
- a guide structure (33) which enables or assists an adaptation of the actual position (PI) and/or an adaptation of the actual orientation (OI) of the product carrier (21, 21') in relation to the battery cell preparation line (1), in particular a guide edge or guide groove; AND/OR
- a preferably self-closing holding means (34) which fixes a battery cell (2, 3) in an inserted position on the product carrier (21), in particular in a reference position and/or under preload against the at least one abutment structure (32).

12. Battery cell preparation method for preparing and providing at least one battery cell (2, 3) for battery module production (7), wherein the at least one battery cell is moved, in the form of an unprocessed battery cell (2), in a battery cell preparation line (1) from a supply region (5) to one or more preparation process stations (9) and is moved, in the form of a prepared battery cell (3), onwards to a transfer region (6), **characterized by** the following steps:
- transporting the battery cell (2, 3) and/or a product carrier (21), which is designed to receive a battery cell (2, 3), with a constant macro conveying movement (A), in particular at a constant conveying speed and/or conveying cycle at the transfer points (18, 19) to the supply region (5) and to the transfer region (6), by means of a main conveying means (8),
- in the region of at least one auxiliary conveying line (20) comprising only one section of the battery cell preparation line (1) between the supply region (5) and the transfer region (6): transporting the battery cell (2, 3) and/or the product carrier (21) with an intermediate conveying movement (B), which temporarily deviates from the macro conveying movement (A), by means of at least one auxiliary conveying means (20), such that the battery cell (2, 3) or the product carrier (21) can be supplied along the auxiliary conveying line (20) to a preparation process (9) at such a speed that the momentary movement of the battery cell (2, 3) is adapted to the requirements of this preparation process (9).

13. Battery cell preparation method according to the preceding claim, wherein the preparation process (9) acts from above on a surface of a moving battery cell (2, 3) and in particular is carried out by a stationarily arranged process member (11, 13, 15, 17).

14. Battery cell preparation method according to one of the preceding claims, wherein a battery cell (2, 3) is received in a product carrier (21) and moved together with the product carrier (21).

15. Battery cell preparation method according to one of the preceding claims, wherein the battery cell preparation line (1) and/or a product carrier (21) is formed according to one of the preceding claims.

## Revendications

1. Ligne de préparation d'éléments de batterie destinée à préparer un ou plusieurs éléments de batterie bruts (2) pour une fabrication de modules de batterie (7), la ligne de préparation (1) comprenant un convoyeur linéaire (4) qui déplace au moins un élément de batterie brut (2) d'une zone d'amenée (5) à un ou plusieurs postes de traitement de préparation (9) qui sont disposés le long de la ligne de préparation (1) et qui poursuit le déplacement des éléments de batterie préparés (3) vers une zone de transfert (6), **caractérisée en ce que** la ligne de préparation possède :
- un moyen de transport principal (8) destiné au déplacement des éléments de batterie, le moyen de transport principal (8) étant configuré pour transporter l'au moins un élément de batterie (2, 3) et/ou un porte-marchandises (21), lequel est configuré pour recevoir un élément de batterie (2, 3), avec un macro-mouvement de transport constant (A), notamment avec une vitesse de transport et/ou une cadence de transport constantes au niveau des points de transfert (18, 19) vers la zone d'amenée (5) et vers la zone de transfert (6),
- au moins un moyen de transport auxiliaire (20), qui est intercalé dans le trajet de transport du moyen de transport principal (8),
- le moyen de transport auxiliaire (20) étant configuré pour transporter au moins un élément de batterie (2, 3) et/ou un porte-marchandises (21), lequel est configuré pour recevoir un élément de batterie (2, 3), avec un mouvement de transport intermédiaire (B) qui diffère temporairement du macro-mouvement de transport (A), de sorte qu'un élément de batterie (2, 3) peut être guidé le long du trajet de transport du moyen de transport auxiliaire (20) vers un poste de traitement de préparation (9) à une vitesse telle que le mouvement momentané de l'élément de batterie (2, 3) et/ou d'un porte-marchandises (21) est adapté aux exigences de traitement de ce poste de traitement de préparation (9).

2. Ligne de préparation d'éléments de batterie selon la revendication 1, la ligne de préparation (1) possédant un ou plusieurs portes-marchandises (21) destinés à recevoir un ou plusieurs éléments de batterie (2, 3), notamment à chaque fois exactement un élément de batterie (2, 3).

3. Ligne de préparation d'éléments de batterie selon la revendication 1 ou 2, un moyen de transport auxiliaire (20) étant réalisé sous la forme d'un convoyeur linéaire magnétique, notamment sous la forme d'un moteur linéaire (25), qui coopère avec au moins un aimant (22, 23, 24) d'un porte-marchandises (21).

4. Ligne de préparation d'éléments de batterie selon l'une des revendications précédentes, le moyen de transport principal (8) étant réalisé sous la forme d'un convoyeur en circuit fermé qui transporte un ou plusieurs portes-marchandises (21), en notamment des portes-marchandises équipés, dans une direction d'avance (X) de préférence linéaire de la zone d'amenée (5) à la zone de transfert (6) et, en outre, dans une direction de retour (X'), renvoie des portes-marchandises (21), notamment des portes-marchandises vides (21'), de la zone de transfert (6) à la zone d'amenée (5), le moyen de transport principal (8) possédant en particulier un élément de convoyage rotatif (26).

5. Ligne de préparation d'éléments de batterie selon l'une des revendications précédentes, un porte-marchandises (21, 21') étant configuré pour recevoir et maintenir un élément de batterie (2, 3) dans une position de référence (R) prédéterminée par rapport à une structure de référence (28) du porte-marchandises (21, 21').

6. Ligne de préparation d'éléments de batterie selon l'une des revendications précédentes, la ligne de préparation d'éléments de batterie (1) possédant au moins un moyen de détection (29), lequel est configuré pour détecter une position réelle (PI) et/ou une orientation réelle (OI) d'un élément de batterie (2, 3) et/ou d'un porte-marchandises (21, 21'), notamment une position réelle relative ou une orientation réelle relative d'un élément de batterie (2, 3) par rapport à un porte-marchandises (21) dans lequel l'élément de batterie (2, 3) est reçu et maintenu, et/ou une position réelle absolue et/ou une orientation réelle absolue d'un élément de batterie (2, 3) et/ou d'un porte-marchandises (21, 21') par rapport à la ligne de préparation d'éléments de batterie (1), la détection s'effectuant de préférence sans contact.

7. Ligne de préparation d'éléments de batterie selon l'une des revendications précédentes, le moyen de transport auxiliaire (20), notamment le convoyeur linéaire magnétique, étant configuré pour adapter le mouvement réel d'un porte-marchandises (21) ou d'un élément de batterie (2, 3) à un mouvement de consigne, notamment pour commander ou pour réguler la position réelle (PI) et/ou la vitesse réelle (VI) et/ou l'orientation réelle (OI) du porte-marchandises (21) ou de l'élément de batterie (2, 3).

8. Ligne de préparation d'éléments de batterie selon l'une des revendications précédentes, au moins un organe de traitement (11, 13, 15, 17) d'un poste de traitement de préparation (9) étant commandé ou régulé en fonction d'une position réelle (PI) et/ou d'une orientation réelle (OI) d'un élément de batterie (2, 3), notamment en fonction d'une position réelle relative et/ou d'une orientation réelle relative d'un élément de batterie (2, 3) par rapport à un porte-marchandises (21) dans lequel l'élément de batterie (2, 3) est reçu et maintenu.

9. Ligne de préparation d'éléments de batterie selon l'une des revendications précédentes, au moins un poste de traitement de préparation (9) étant disposé sur la ligne de préparation d'éléments de batterie (1), et notamment sur le trajet de transport d'un moyen de transport auxiliaire (20), de telle sorte qu'un organe de traitement (11, 13, 15, 17) du poste de traitement de préparation (9) agit sensiblement par le haut sur un élément de batterie (2, 3) qui est déplacé par le moyen de transport auxiliaire (20) le long de l'organe de traitement (11, 13, 15, 17) respectif, le poste de traitement de préparation (9) et/ou son organe de traitement (11, 13, 15, 17) étant notamment disposés de manière stationnaire.

10. Ligne de préparation d'éléments de batterie selon l'une des revendications précédentes, au moins un poste de traitement de préparation (9) étant réalisé sous la forme de :
- dispositif de nettoyage (10) qui débarrasse une surface d'un élément de batterie (2, 3) des salissures, notamment par application et éventuellement élimination ultérieure d'un fluide de nettoyage ; OU de
- dispositif de traitement de surface (12) qui agit sur un matériau de surface d'un élément de batterie (2, 3), notamment par application de plasma ou de rayonnement ; OU de
- dispositif d'application de matériau (14) qui applique un matériau supplémentaire sur une surface d'un élément de batterie (2, 3), notamment un adhésif, un agent isolant, un agent d'étanchéité, un élément d'écartement ; OU de
- dispositif de garnissage (16) qui applique un garnissage sur une surface d'un élément de batterie (2, 3), notamment une feuille d'écartement ou une pièce d'écartement.

11. Porte-marchandises destiné à être utilisé dans une ligne de préparation d'éléments de batterie (1) selon l'une des revendications précédentes, le porte-marchandises (21, 21') possédant :
- un corps de base (30) muni d'une cavité de réception (31) pour la réception d'un ou de plusieurs éléments de batterie (2, 3), notamment pour la réception d'exactement un élément de batterie (2, 3) ;
- au moins une structure d'appui (32), qui forme une butée pour une réception ajustée avec précision d'un élément de batterie (2, 3),
**caractérisé en ce que** le porte-marchandises possède en outre :
- au moins un aimant (22, 23, 24) qui coopère avec un convoyeur linéaire magnétique, notamment un moteur linéaire (25) d'un moyen de transport auxiliaire (20) de la ligne de préparation d'éléments de batterie (1) ; ET/OU
- une structure de référence (28) qui rend possible ou assiste une détection, de préférence sans contact, de la position réelle (PI) et/ou de l'orientation réelle (OI) du porte-marchandises (21, 21') par un moyen de détection (29) de la ligne de préparation d'éléments de batterie (1), notamment un marqueur optique ou électromagnétique ; ET/OU
- une structure directrice (33) qui rend possible ou assiste une adaptation de la position réelle (PI) et/ou une adaptation de l'orientation réelle (OI) du porte-marchandises (21, 21') par rapport à la ligne de préparation d'éléments de batterie (1), notamment un bord de guidage ou une rainure de guidage ; ET/OU
- un moyen de retenue (34) de préférence à fermeture automatique, qui cale un élément de batterie (2, 3) dans une position insérée sur le porte-marchandises (21), notamment dans une position de référence et/ou sous précontrainte contre l'au moins une structure d'appui (32).

12. Procédé de préparation d'éléments de batterie pour la préparation et la mise à disposition d'au moins un élément de batterie (2, 3) pour une fabrication de module de batterie (7), l'au moins un élément de batterie étant déplacé en tant qu'élément de batterie brut (2) dans une ligne de préparation d'éléments de batterie (1) d'une zone d'amenée (5) vers un ou plusieurs postes de traitement de préparation (9) et étant en outre déplacé en tant qu'élément de batterie préparé (3) vers une zone de transfert (6), **caractérisé par** les étapes suivantes :
- transport de l'élément de batterie (2, 3) et/ou d'un porte-marchandises (21), lequel est configuré pour recevoir un élément de batterie (2, 3), avec un macro-mouvement de transport constant (A), notamment avec une vitesse de transport et/ou une cadence de transport constantes au niveau des points de transfert (18, 19) vers la zone d'amenée (5) et vers la zone de transfert (6), par un moyen de transport principal (8),
- dans la zone d'au moins un trajet de transport auxiliaire (20), qui ne comprend qu'une portion partielle de la ligne de préparation d'éléments de batterie (1) entre la zone d'amenée (5) et la zone de transfert (6) : transport de l'élément de batterie (2, 3) et/ou du porte-marchandises (21) avec un mouvement de transport intermédiaire (B), qui diffère temporairement du macro-mouvement de transport (A), par au moins un moyen de transport auxiliaire (20), de sorte que l'élément de batterie (2, 3) ou le porte-marchandises (21) peut être amené le long du trajet de transport auxiliaire (20) à un processus de préparation (9) à une vitesse telle que le mouvement momentané de l'élément de batterie (2, 3) est adapté aux exigences de ce processus de préparation (9).

13. Procédé de préparation d'éléments de batterie selon la revendication précédente, le processus de préparation (9) agissant par le haut sur une surface d'un élément de batterie (2, 3) en mouvement et étant notamment exécuté par un organe de traitement (11, 13, 15, 17) disposé de manière stationnaire.

14. Procédé de préparation d'éléments de batterie selon l'une des revendications précédentes, un élément de batterie (2, 3) étant reçu dans un porte-marchandises (21) et étant déplacé conjointement avec le porte-marchandises (21).

15. Procédé de préparation d'éléments de batterie selon l'une des revendications précédentes, la ligne de préparation d'éléments de batterie (1) et/ou un porte-marchandises (21) étant réalisé selon l'une des revendications précédentes.
